# EUROPEAN PATENT APPLICATION

(11) **EP 2 738 728 A1**
(43) Date of publication of application: **04.06.2014**
(21) Application number: 13194366.4
(22) Date of filing: 26.11.2013
(51) Int. Cl.: G06Q 30/02

(54) **Method and system for conducting a survey**

(30) Priority: 29.11.2012 IN MU34032012
(71) Applicant: Tata Consultancy Services Limited, 400021 Mumbay (IN)
(72) Inventor: Thaskani, Sandhya Sree, 560066 Bangalore Karnataka (IN); Sood, Aditya, 560066 Bangalore Karnataka (IN); Purushothaman, Balamuralidhar, 560066 Bangalore Karnataka (IN); Chandra, Mariswamy Girish, 560066 Bangalore Karnataka (IN)
(74) Representative: Danner, Stefan

(57) **Abstract**

Described are a method and a system for conducting a survey of at least one survey item. The method includes obtaining historical survey data of the at least one survey item for T number of data stores. The method also includes determining a sparsity number K associated with the historical survey data of the at least one survey item for the T number of data stores. The method also includes determining a target number M based on the sparsity number K. The target number M is indicative of a reduced number of data stores, present amongst the T number of data stores, for collection of current survey data to estimate current survey data of the at least one survey item for the T number of data stores.

## Description

### TECHNICAL FIELD

The present subject matter relates to methods and systems for conducting a survey of one or more survey items for multiple data stores.

### BACKGROUND

A survey is often conducted for a plurality of retail stores in a geographical area that offer a variety of products to consumers. Retail stores are usually located over a wide area, including urban, semi-urban and rural areas, in order to offer products wide spread. The products may include household items, food items, electronics goods, and such. The survey may be conducted to gather the retail or sales data for the retail stores for various purposes. The gathered data may be for the retail of products on a daily-basis, fortnight-basis, monthly-basis, or the like, and, based on the gathered retail data, market research firms may generate analytics to grasp a tendency of consumers' choices, product popularity, etc.

A similar survey may also be conducted for other centers or places, for example hospitals, farming fields, and such, in a geographical area depending on the requirements. The survey may be conducted for a plurality of hospitals in geographical area to gather the number of cases reported for a disease endemic in that area or the number of cured cases for a disease in that area. Such a survey may be conducted for hospitals for various purposes, including analytics of the spread of the disease and how efficiently it was cured. Similarly, the survey may be conducted for a plurality of farming fields in a geographical area to gather yield details of a crop at those farming fields. Such a survey may be conducted for the farming fields for various purposes, including analytics of average yield of the crop in the area.

In order to conduct surveys for centers or places, like the retail stores, the hospitals or the farming fields, substantially high investments towards resources, management, and infrastructure, are required. Thus, it is important to identify methodologies for conducting a survey which are substantially efficient and facilitate in reducing the investments towards resources, management, and infrastructure required for the survey.

### SUMMARY

This summary is provided to introduce concepts related to conducting a survey of one or more products for multiple data stores. This summary is neither intended to identify essential features of the claimed subject matter nor is it intended for use in determining or limiting the scope of the claimed subject matter.

In accordance with an embodiment of the present subject matter, a method for conducting a survey of at least one survey item is described. The method includes obtaining historical survey data of the at least one survey item for T number of data stores. The method also includes determining a sparsity number K associated with the historical survey data of the at least one survey item for the T number of data stores and determining a target number M based on the sparsity number K. The target number M is indicative of a reduced number of data stores, present amongst the T number of data stores, for collection of current survey data to estimate current survey data of the at least one survey item for the T number of data stores.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a method for conducting a survey of at least one survey item, according to an embodiment of the present subject matter.
Figure 2 illustrates a network environment implementing a survey conducting system, according to an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DETAILED DESCRIPTION

The present subject matter relates to systems and methods for conducting a survey of one or more survey items for multiple data stores. The data stores may be located at locations in a wide geographical area. Depending on the survey, the data stores may include retail stores, such as shops and outlets; include health centers, such as hospitals, clinics and dispensaries; and include agricultural regions, such as farming fields. The survey item and the survey data are dependent on the type of data stores for survey. In an example where the retail stores arc the data stores for the survey, the corresponding survey item may include retail products, such as household items, food items, electronics goods, and the like, that are offered by the retail stores to consumers, and the corresponding survey data may include retail or sales data of the retail product. In an example where the hospitals are the data stores for the survey, the corresponding survey item may include a disease for which patients have visited the hospitals, and the corresponding survey data may include number of case reported for the disease. Further, in an example where the farming fields are the data stores for the survey, the corresponding survey item may include a crop which is grown in the farming fields, and the corresponding survey data may include yield of the crop.

Data stores included in the ambit of survey, for which survey data of survey items are to be gathered may be substantially large in number. Also, the types of survey items for which data are to be gathered maybe large in number. Conventional methods for conducting a survey rely of gathering of survey data of all the survey items and for all the data stores. The survey data for all the data stores and for all the survey items are typically gathered for the purpose of generation of a substantially correct and true analytics from the survey data. With the large number of data stores and, in addition, the large number of survey items, the gathering of survey data for all the data stores and for all the survey items typically requires substantially high investment towards resources, management, infrastructure, etc.

In an example, for conducting a survey for data stores, survey data may be gathered via a network, such as internet. For this, the survey data for the data stores may be collected by sensors, such as billing terminals or machines, or data-logging machines, and automatically sent to a central server for further processing, like report generation. With the large number of data stores and the large number of survey items for which the survey data is to be collected, conventionally, the data collection for the survey consumes enormous bandwidth of the network. For this, the internet connectivity needs to be substantially good, for example, with a high bandwidth. With no internet connectivity or low bandwidth the survey data may be not be effectively collected for all the data stores and for all the survey items. The data collection may also get delayed due to low bandwidth over the network.

Further, the data stores can be located in rural areas, urban areas and semi-urban areas. In rural and semi-urban areas, where network connectivity and/or internet penetration are substantially low, human surveyor(s) needs to manually visit each and every data store to collect the survey data. With the large number of data stores and the large number of survey items for which the survey data is to be collected, conventionally, the data collection by human surveyors requires substantially large manpower and coordination. Also, the data collection for all the data stores and for all the survey items is time consuming.

The present subject matter describes systems and methods for conducting a survey of one or more survey items for multiple data stores. The methodology of the present subject matter involves estimation of survey data for one or more survey items for a large number of data stores based on survey data collected or gathered for a fewer number of data stores. Said methodology relies on reconstruction of survey data for all the data stores, in the ambit of survey, from the survey data collected for the fewer data stores in accordance with the present subject matter.

In accordance with the methodology of the present subject matter for conducting a survey of a survey item from multiple data stores, historical survey data of the survey item is obtained for T number of data stores. The historical survey data may be understood as the past survey data, for example, a month or more prior to conducting the current survey, for that survey item. The T number of data stores are the total number of data stores under consideration or in the ambit of survey. Based on the historical survey data, a sparsity number K is determined which is indicative of the sparseness of the historical survey data of the product for the T number of data stores in a mathematical domain. For determining the sparsity number K, the obtained historical survey data may be transformed from one domain to another using a predefined mathematical transformation. The sparsity number K corresponds to the number of values of the historical survey data that are not zero after the mathematical transformation. Based on the sparsity number K, a target number M is determined which is indicative of a reduced number of data stores, from or present amongst the T number of data stores, for collection of survey data.

In an implementation, the target number M is a multiplication factor s times the sparsity number K, such that the target number M is in a range from about 0.3 times the T number to about 0.5 times the T number. In an implementation, the multiplication factor s may be 1.5.

The target number M is a basis of determination of number of data stores for which current survey data is to be collected. With this, the current survey data of the survey item for the T number of data stores can be estimated in accordance with the present subject matter. As the target number M is substantially less, i.e., half or less than the T number, with respect to scenario where a plurality of the data stores is in rural areas, the manpower requirement is substantially reduced as a smaller subset (M number) of the data stores may actually he visited by the human surveyors. This allows the data collection to be conducted with much higher frequency and also reduces the efforts and the cost of data collection. With respect to the scenario where a plurality of data stores is in urban areas, the amount of current survey data to be collected and transmitted over a network is less, which reduces the bandwidth requirements.

Further, for conducting a survey of the survey item for the T number of data stores, in an implementation, M number of data stores are identified from the T number of data stores for the collection of the survey data. The M number of data stores are randomly identified from the T number of data stores. Based on the identification of the M number of data stores, current survey data of the survey item for the M number of data stores are obtained. The current survey data may be understood as the recent data, for example, of a day, of a week, of a fortnight or of a month prior to the day the survey of the survey item is conducted. Further, based on the current survey data for the M data stores, current survey data of the survey item for the T number of data stores are estimated. In an implementation, the current survey data of the survey item for the T number of data stores are estimated based on an L1-minimization computation on the current survey data obtained for the M number of data stores. The L1-minimizaton computation allows in reconstruction of current survey data for the T number of data stores from the current survey data for the lesser number, i.e., M number, of data stores.

The methodology of the present subject matter is described above for conducting a survey of one survey item for the T number of data stores. In an implementation, the same procedure can be repeatedly carried out for more than one survey item.

In another implementation, in case a survey is conducted of multiple survey items based on the present subject matter, M number of data stores are identified, for example, randomly, from the T data stores, and historical survey data of the multiple survey items for M number of data stores are obtained. After obtaining the historical survey data for the multiple survey items for the M number of data stores, M' number of data stores are selected from the M number of data stores based on a correlation between the historical survey data of one or more pairs of the survey items. Here, number M' is integer less than the number M. The correlation may be based on the influence of data of one survey item on the data of the other survey item in each pair. For example, the correlation may be based on the influence of sales of one retail product on the sales of other retail product. This correlation between certain pairs of survey items facilitates in exploiting inter-item redundancy to reduce the number of data stores from which current survey data is to be collected. Based on the selection of the M' number of data stores, current survey data of the multiple survey items for the M' number of data stores are obtained. Further, based on the current survey data for the M' number of data stores, current survey data of the multiple survey items for the T number of data stores are estimated. In an implementation, the current survey data of each of the multiple survey items for the T number of data stores are estimated based on L1-minimization computation on the current survey data obtained of the corresponding survey item for the M' number of data stores.

With the collection of current survey data from a fewer number of data stores in reference to the total number of data stores under consideration for survey, the process of data gathering becomes substantially efficient and the efforts required for the data gathering are substantially reduced. In addition, the requirements of resources, management and infrastructure, and the time consumed for data collection, are also substantially reduced in comparison to the conventional methodologies. In an example, with the methodology of the present subject matter, if the current survey data is gathered or collected over a network the consumption of bandwidth of the network for the data collection is substantially less. Similarly, with the methodology of the present subject matter, if the current survey data is gathered or collected manually by human surveyors the requirement of manpower to be deployed for the data collection is substantially less.

These and other advantages of the present subject matter would be described in greater detail in conjunction with the following figures. It should be noted that the description and figures merely illustrate the principles of the present subject matter.

In an implementation, the methodology of the present subject matter may be followed for conducting a survey for data stores such as retail stores, hospitals, and farming fields. The corresponding survey item, as mentioned earlier, may include a retail product offered for retail by the retail stores, a disease for which patients have visited the hospitals, a crop which is grown in the farming fields, and the corresponding survey data, as mentioned earlier, may include retail or sales data of the retail product, number of case reported for the disease, and yield of the crop. Although, the examples of retail stores, hospitals, and farming fields as the data stores are provided in the specification herein, the methodology of the present subject matter may be applied for conducting a survey of one or more survey items for other centers, and places, albeit a few variations as appreciated by a person skilled in the art.

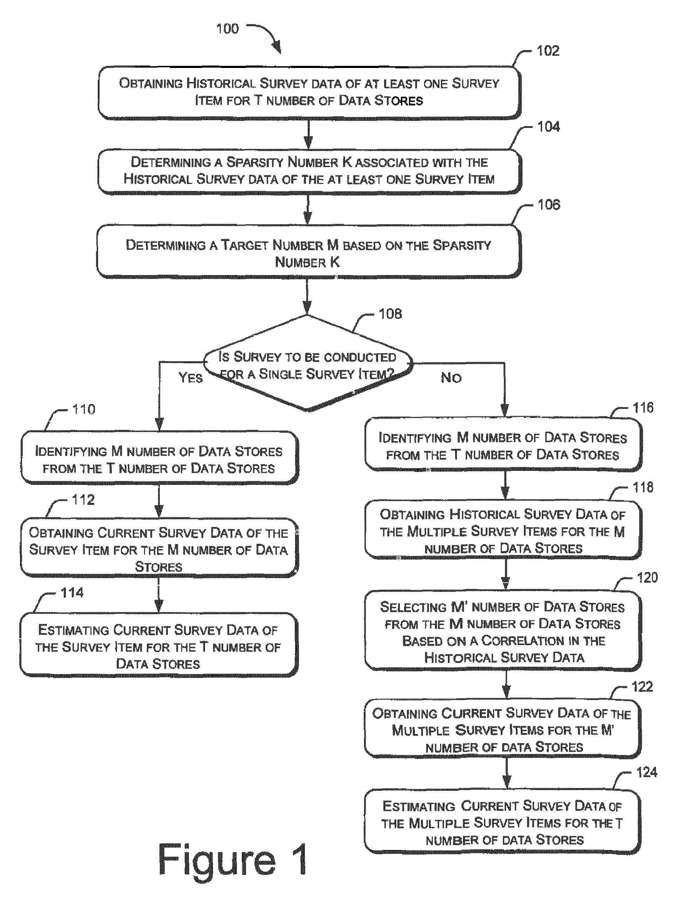

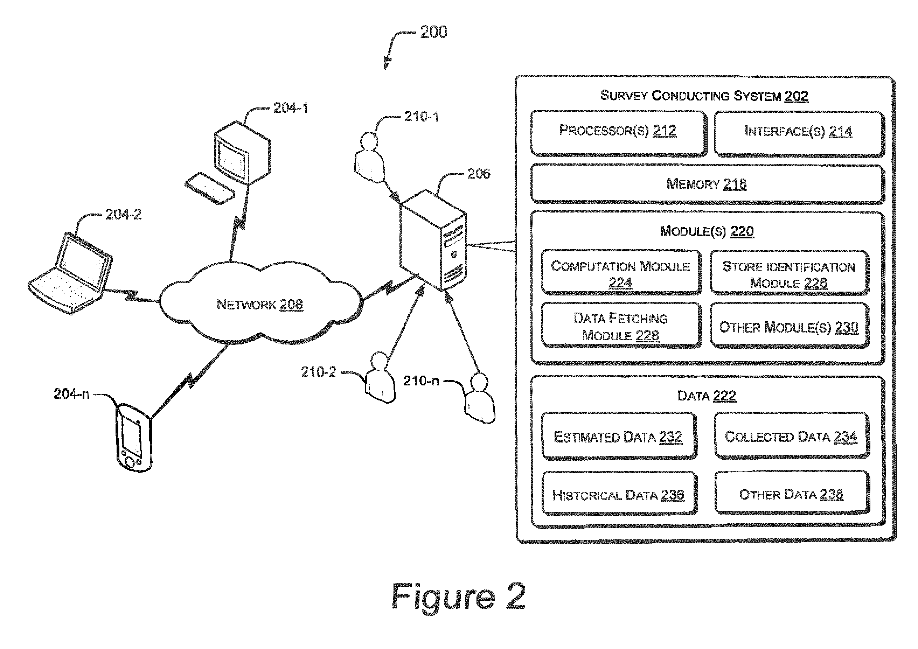

Figure 1 illustrates a method 100 for conducting a survey of at least one survey item. The method 100 may be implemented in a survey conducting system which is described later in the description with reference to Figure 2.

The method 100 may be described in the general context of computer executable instructions. Generally, computer executable instructions can include routines, programs, objects, components, data structures, procedures, modules, and functions that perform particular functions or implement particular abstract data types. The method 100 may also be practiced in a distributed computing environment where functions are performed by remote processing devices that are linked through a communications network. In a distributed computing environment, computer executable instructions may be located in both local and remote computer storage media, including memory storage devices.

The order in which the method 100 is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the method 100 can be implemented in any suitable hardware, software, firmware, or combination thereof.

In an implementation, we assume that the ambit of survey includes T number (e.g. 10000 or more) of data stores in a geographical region. The survey may be conducted of a single survey item or of multiple survey items for the T number of data stores.

At block 102, historical survey data of the at least one survey item for the T number of data stores are obtained. The historical survey data of the at least one survey item may be pre-recoded in data books of the data stores, or pre-stored in a storage device of the data stores or in a central database. The historical survey data may be obtained from at least one of the data books, the storage device, and the central database.

At block 104, a sparsity number K is determined based on the historical survey data of each of the at least one survey item for the T number of data stores. The sparsity number K is indicative of the sparseness of the historical survey data of the survey item in a particular domain, and corresponds to the number of non-zero values in the data obtained after performing a predefined mathematical transformation on the historical survey data from one domain to another domain.

In an implementation, for determining the sparsity number K, the historical survey data of one of the survey items for the T number of data stores in distributed in a matrix. The distribution is such that each of the elements of the matrix has the historical survey data of one survey item for one of the T number of data stores. The matrix may be of an order of N1 x N2, where numbers N1 and N2 are integers greater than zero such that the number N1 x N2 is equal to the number T. In an example, the matrix may be a 2-dimension matrix, i.e., a square or a rectangular matrix. In another example, the matrix may a 1-dimensional matrix, where the number N1 may be equal to 1 and the number N2 may be equal to T, or vice versa.

After the distribution of the historical survey data in the matrix, a predefined mathematical transformation is performed on the matrix. The predefined mathematical transformation includes, but is not restricted to, Discrete Fourier Transform (DFT), Discrete Wavelet Transform (DWT), Discrete Cosine Transform (DCT), Karhunen-Loève Transform (KLT), and such. By performing the mathematical transformation, most of the values of elements of the matrix may be zero or very close to zero. As a result, a sparseness of the historical survey data in the matrix is emphasized after the mathematical transformation. For determining the sparsity number K, number of elements, amongst the all elements, of the transformed matrix having significant or non-zero values is determined. The number of non-zero elements in the transformed matrix is the sparsity number K for that survey item.

In an implementation, the sparsity number K is determined individually for each of the survey items. Based on this, the lowest of the determined sparsity numbers K is selected as the sparsity number K for further processing in accordance with the present subject matter.

Further, in an implementation, the historical survey data of the survey item for the T number of data stores may be distributed randomly in the matrix. In an implementation, more than one matrix may be generated with the historical survey data distributed randomly in different manners in each of the matrices. Based on this, one of the matrices may be selected based on a level of sparseness of the distributed historical survey data in the matrices, for determining the sparsity number K.

In an implementation, for each of the survey items, the historical survey data of the survey item for the T number of data stores may be distributed in the matrix based on a lexicographical order of the T number of data stores with a location proximity of the T number of data stores. For such a distribution, at first, one data store in randomly selected from the T number of data stores, and assigned or named with a number, for example, 1. Then, a data store, which is in the closest proximity of the data store numbered as 1, is selected and named with a number 2. Subsequently, a data store, which is in the second closest proximity of the data store numbered as 1, is selected and named with a number 3. The procedure of selection and naming, based on the proximity of location, is repeated for all the T number of data stores and the data stores are named till the number T.

After naming the data stores, the elements of the matrix, into which the historical survey data for the T number of data stores is to be distributed, are named with numbers from 1 to T. For example, consider a case where the matrix is a rectangular matrix of the order N1 x N2. For naming the elements, starting from the first element of the first row of the matrix, all the elements of the first row are named with numbers from 1 to N 1. Then, starting from the first element of all the elements of the second row of the matrix, all the elements of the second row are named with numbers from (N1 + 1) to (2 x N1). The procedure of naming is done for the elements of all the rows of the matrix.

Now, after naming the data stores and naming the elements of the matrix, the historical survey data of the survey item for the data store numbered 'i' is put in the element numbered 'i'. With this distribution procedure, the historical survey data of the proximally close data stores in the geographical area are distributed close to each other.

After determining the sparsity number K, a target number M is determined at block 106.The target number M is indicative of a reduced number of data stores, from the T number of data stores, from which current survey data is to be collected. The target number M may be of the order of the sparsity number K times log T. In an implementation, the target number M is determined by multiplying a multiplication factor s by the sparsity number K, i.e., M = s x K, such that the target number M is in a range from about 0.3 times the number T to about 0.5 times the number T. Here, the multiplication factor s can be equal to 1.5. In an example, for the number T equal to 10000, the target number M may be in a range from about 3500 to about 4500, depending on the sparsity number K.

Further, after determining the target number M, it may be checked, at block 108, whether the survey is to be conducted for a single survey item or for multiple survey items from the data stores. For conducting the survey of a single product ('Yes' branch from block 108), M number of data stores are identified from the T number of data stores for data collection at block 110. The M number of data stores may be identified randomly from the T number of data stores.

In an implementation, the random identification of M number of data stores from the T stores may be performed using a random number generator. The random number generator may be a conventional number generator configured to generate numbers that lack any order or pattern. The random number generator is used to generate M random numbers from 1 to the number T, and the M number of data stores are identified based on the M random numbers. For example, the data stores numbers corresponding to the M random numbers are identified for the data collection.

After identifying the M number of data stores, current survey data of the survey item for the M number of data stores is obtained at block 112. In an implementation, the current survey data of the survey item for the M number of data stores may be obtained through at least one of sensors and human surveyors. The sensors may include computerized billing terminals, data-logging machines, or a similar machine or device, depending on the type of data stores, which collects and maintains a record of survey data. The survey data may be collected on a daily-basis, a weekly-basis, monthly-basis, or such, for one or more survey items for the data stores. The sensors may collect and transmit the survey data to a central database at regular intervals (say, daily, weekly, monthly), through a network. From the central database the current survey data of the survey item for the identified M number of data stores may be obtained for further processing. Further, for obtaining the current survey data through the human surveyors, the human surveyors may have to manually visit the M number of data stores, and collect or recorded the current survey data of the survey item in data log book(s) or in hand-held data logging device(s). The collected data may then be reported manually or via a network to a central database. For the purpose of further processing, the current survey data may be directly obtained from the human surveyors, or may be obtained from the central database, as the case may be.

The data stores may be located in rural areas, in semi-urban areas or in urban areas. The current survey data for the survey item may be collected for M number of data stores using sensors or by human surveyors, or through a combination both, depending on the availability of a network connection. In the cases where the current survey data is collected using sensors, the process of data collection may be automatic and non-intrusive in nature as it does not require much human intervention. Thus, the collection of data can happen continuously in a 24*7 manner. The sensors keep collecting data in the background and do not affect the day-to-day operations at the data stores.

After obtaining the current survey data of the survey item for the M number of stores, current survey data of the survey item for the T number of data stores are estimated, at block 114, by performing reconstruction of data on the current survey data for the M number of data stores. In an implementation, the current survey data of the survey item for the T number of data stores may be estimated or reconstructed using an L1-minimization computation on the obtained current survey data of the survey item for the M number of data stores. The concept of L1-minimization for reconstruction of more data from less data is conventionally known, and, hence, not described in detail in the description herein. In an implementation, the L1-minimization computation may be carried out using conventional greedy computation processes, such as Basic Pursuit, Orthogonal Matching Pursuit, and Homotopy.

The procedure of estimation of survey data, i.e., the current survey data, is described above for one survey item. In an implementation, the procedure for estimation of current survey data may be performed repeatedly and individually for each product, in case the data is to be estimated for multiple survey items.

In an implementation, for conducting the survey of multiple survey items ('No' branch from block 108), M number of data stores are identified from the T number of data stores for data collection at block 116. The M number of data stores may be identified randomly from the T number of data stores in a manner as described earlier in the description.

At block 118, historical survey data of the multiple survey items for the M number of data stores are obtained. The historical survey data of the multiple survey items may be pre-recoded in data books of the data stores, or pre-stored in a storage device of the data stores or in a central database. The historical survey data may be obtained from at least one of the data books, the storage device, and the central database.

After obtaining the historical survey data of the multiple survey items for the M number of data stores, M' number of data stores are selected from the M number of data stores based on a correlation between the historical survey data of one or more pairs of the survey items at block 120. The number M' is an integer less than the number M. The correlation may be based on the influence of data of one survey item on the data of the other survey item in each pair.

In an example, where the data stores are retail stores and the survey items are retail products offered by the retail stores, certain pairs of retail products may be correlated in a manner that if a customer buys product A, then he is more likely to buy product B to compliment product A. Examples of such pairs of retail products may include pen and notebook, bread and jam, soap and deodorant, shampoo and conditioner, and such. This correlation between retail of certain products, or, in general, between the survey data of survey items, may facilitate in exploiting the redundancy of survey data and in turn facilitate in reducing the total number data stores from which current survey data may be collected. The number of data stores may be reduced by dropping one or more data stores from the M number of identified data stores. A data store may be dropped if one or more pairs of survey items, from the multiple survey items at the data store, has a correlation in the historical survey data.

Further, after selecting the M' number of data stores, current survey data of the multiple survey items for the M' number of data stores are obtained at block 122. In an implementation, the current survey data of the multiple survey items for the M' number of data stores may be obtained through at least one of the sensors and human surveyors in a manner described in detail earlier in the description.

After obtaining the current survey data of the multiple survey items for the M' number of stores, current survey data of the multiple survey items for the T number of data stores are estimated, at block 124, by performing reconstruction of data on the current survey data for the M' number of data stores. In an implementation, the current survey data of the each of the survey items for the T number of data stores may be estimated or reconstructed using an L1-minimization computation on the obtained current survey data of the survey items for the M' number of data stores, as mentioned earlier in the description.

Further, in the cases where the current survey data is collected using sensors, and the collected data is transmitted over a network to a central database for further processing, some of the data may be lost during the transmission. In an implementation, in order to prevent such data loss, the collected data is encoded with real-field codes before the transmission of the data. The central database, for example, a central server, may decode the received data and store the current survey data therein. The encoding and decoding of the data with real-field codes is known to a skillful person, and, thus, is not described in detail in the description herein.

In an implementation, the data loss may be compensated through an oversampling factor δ. In said implementation, the target number M is increased by adding the oversampling factor δ. With this, the target number M is a sum of the multiplication factor s times the sparsity number K and the oversampling factor δ. Here, the oversampling factor δ is integer less than the multiplication factor s times the sparsity number K (δ < s x K). Thus, with the oversampling factor δ, the number of data stores from which the current survey data is to be collected increases by a small number which guards against the loss of data.

The method 100 may be used to conduct a survey for data stores including, but not restricting to, retail stores, hospitals, and farming fields. In an implementation, where the data stores are retail stores, the survey items include retail products offered for sales by the retail stores. For said implementation, the historical survey data include historical retail or sales data of the retail products, and the current survey data include current retail or sales data of the retail products.

Figure 2 illustrates a network environment 200 implementing a survey conducting system 202 for conducting a survey of at least one survey item, according to an embodiment of the present subject matter. The network environment 200 may be understood as a public or a private networking system. As shown, the network environment 200 may include network terminals 204-1, 204-2, ..., 204-n, collectively referred to as the network terminals 204 and individually referred to as the network terminal 204. The current survey data of at least one survey item for data stores may be collected through the network terminal 204. The network terminals 204 may include sensors, such as billing machines, point of sale terminals, data-logging devices, hand-held data logging devices. The hand-held data logging devices may be communicating devices that include, but are not limited to, mobile phones, smart phones, personal digital assistants, tablets, and the like.

The type of network terminals 204 in the network environment 200 may depend on the type of data stores (not shown) for which the survey is to be conducted. In an example, where the data stores are retail stores, the network terminals 204 may include billing machines and point of sale terminals installed at the retail stores, and may include hand-held data logging devices, through which the current retail data is collected. In an example, where the data stores are hospitals, the network terminals 204 may include data-logging devices installed at the hospitals, and may include hand-held data logging devices, through which current reported cases for a disease is collected. In another example, where the data stores are farming fields, the network terminals 204 may include data-logging devices and hand-held data logging devices through which current yield of a crop is collected.

The network terminals 204 are coupled to a computing device 206 over a network 208 through one or more communication links for transmitting the collected data. In an implementation, the survey conducting system 202 is implemented in the computing device 206 for the purpose of conducting a survey for the data stores. The computing device 206 may include, but is not limited to, a server, a workstation, a mainframe computer, a desktop PC, a notebook, a portable computer, and the like. The computing device 206 may be one, or combination of one or more, storage server or network server.

In an implementation, as shown, the computing device 206 has a database to store the collected current survey data transmitted by one or more of the network terminals 204. In an implementation, the network terminals 204 may transmit the collected current survey data to an external database, and the computing device 206 with the survey conducting system 202 may communicatively coupled with such database for obtaining the collected current survey data.

Further, in an implementation, network environment 200 may include human surveyor 210-1, 210-2, ..., 210-n, collectively referred to as the human surveyors 210 and individually referred to as the human surveyor 210. The human surveyors 210 may collect the current survey data from the data stores (not shown) and report the collected data to the computing device 206 with the survey conducting system 202.

The network 208 may be understood as a network, including personal computers, laptops, various servers and other computing devices. The communication links between the network terminals 204 and the computing device 206 are enabled through a desired form of communication, for example, via dial-up modem connections, cable links, and digital subscriber lines (DSL), wireless or satellite links, or any other suitable form of communication.

Further, the network 208 may be a wireless network, a wired network, or a combination thereof. The network 208 can also be an individual network or a collection of many such individual networks, interconnected with each other and functioning as a single large network, e.g., the Internet or an intranet. The network 208 can be implemented as one of the different types of networks, such as intranet, local area network (LAN), wide area network (WAN), the internet, and such. The network 208 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 208 may include network devices, such as network switches, hubs, routers, and Host Bus Adapters (HBAs), for providing a link between the network terminals 204 and the computing device 206. The network devices within the network 208 may interact with the network terminals 204 and the computing device 206 through the communication links.

The survey conducting system 202 includes one or more processor(s) 212, interface(s) 214, a memory 218, module(s) 220, and data 222, coupled to the processor(s) 212. The processor(s) 212 can be a single processor unit or a number of units, all of which could include multiple computing units. The processor(s) 212 may be implemented as one or more microprocessors, microcomputers, microcontrollers, digital signal processors, central processing units, state machines, logic circuitries, and/or any devices that manipulate signals based on operational instructions. Among other capabilities, the processor(s) 212 is configured to fetch and execute computer-readable instructions and data stored in the memory 218.

Functions of the various elements shown in Figure 2, including the functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, or by a plurality of sub-processors. Moreover, explicit use of the term "processor" should not be construed to refer exclusively to hardware capable of executing software, and may implicitly include, with a limitation, Digital Signal Processor (DSP) hardware, network processor, Application Specific Integrated Circuit (ASIC), Field Programmable Gate Array (FPGA), Read Only Memory (ROM) for storing software, Random Access Memory (RAM), and non-volatile storage. Other hardware, conventional or custom, may also be included. Further, the processor(s) 212 may include various hardware components, such as adders, shifters, sign correctors, and generators required for executing various applications, such as arithmetic operations.

The interface(s) 214 may include a variety of software and hardware interfaces, for example, interfaces for peripheral device(s), such as a keyboard, a mouse, an external memory, and a printer. The interface(s) 214 may enable the survey conducting system 202 to communicate with other devices, such as external computing devices and external databases.

The memory 218 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

The module(s) 220 include routines, programs, objects, components, data structures, and the like, which perform particular tasks or implement particular abstract data types. The module(s) 220 further include modules that supplement applications on the survey conducting system 202, for example, modules of an operating system. The data 222, amongst other things, serves as a repository for storing data that may be processed, received, or generated by one or more of the modules 220.

In an implementation, the modules 220 of the survey conducting system 202 include a computation module 224, a store identification module 226, a data fetching module 228, and other module(s) 230. The other module(s) 230 may include programs or coded instructions that supplement applications and function, for example, programs in the operating system of the survey conducting system 202.

In an implementation, the data 222 include estimated data 232, collected data 234, historical data 236, and other data 238. The other data 238 includes data generated as a result of the execution of one or more modules in the other module(s) 230.

The computation module 224 is configured to obtain historical survey data of at least one survey item for T number of data stores. The historical survey data may be pre-stored in the survey conducting system 202, or may be obtained from an external database (not shown) and stored in the historical data 236.

Based on the historical survey data of the at least one survey item for the T number of data stores, the computation module 224 determines a sparsity number K associated with the historical survey data. In an implementation, for determination of the sparsity number K, the historical survey data is distributed in a matrix, and a predefmed mathematical transformation is performed on the matrix. The predefined mathematical transformation includes, but is not restricted to, DFT, DWT, DCT, KLT, and such. The number of elements in the transformed matrix having non-zero values is determined as the sparsity number K. The matrix is of an order of N1 x N2, where the number N1 x N2 is equal to the number T.

In an implementation, the historical survey data of each of the survey items for the T number of stores is distributed randomly in a matrix. The distribution is such that each of the elements of the matrix has the historical survey data of one survey item for one of the T number of data stores. Also, in an implementation, the historical survey data of a survey item for the T number of data stores may be distributed in the matrix based on a lexicographical order of the T number of data stores with a location proximity of the T number of data stores, as described earlier in the description.

Further, based on the determined sparsity number K, the computation module 224 determines a target number M. The target number M is indicative of a reduced number of data stores, from the T number of data stores, for the collection of current survey data to estimate current survey data of the at least one survey item for the T number of data stores. Further, in an implementation, the target number M is determined by multiplying a multiplication factor s by the sparsity number K, i.e., M = s x K, such that the target number M is in a range from about 0.3 times the number T to about 0.5 times the number T. The multiplication factor s is equal to 1.5.

Subsequent to determining the target number M, if the survey is to be conducted for a single survey item, the store identification module 226 identifies M number of data stores randomly from the T number of data stores for the data collection. In an implementation, the store identification module 226 may be configured to identify the M number of data stores from the T number of data stores using a random number generator in a manner described earlier in the description.

After identifying the M number of data stores, the data fetching module 228 fetches or obtains current survey data of the survey item for the M number of data stores. In an implementation, the data fetching module 228 may fetch the current survey data of the survey item from at least one of the network terminals 204 and the human surveyors 210. In the cases where the data is collected by the human surveyors 210 or the network terminals 204, such as hand-held devices or data logging devices operated by a human surveyor, the manpower requirement is substantially reduced as a small number, i.e., the M number, of data stores is to be visited by the human surveyors 210. In the cases where the data is collected using the sensors, the amount of data to be transmitted over the network 208 is substantially reduced as the data is to be collected from a small number, i.e., the M number, of data stores. This substantially reduces the bandwidth requirements of the network 208. The current survey data is stored in the collected data 234.

Further, based on the fetched current survey data of the survey item for the M number of data stores, the computation module 224 estimates current survey data of the survey item for the T number of data stores. As mentioned earlier, in an implementation, the current survey data of the survey item for the T number of data stores may be estimated by the computation module 224 through the reconstruction of data from the fetched current survey data of the survey item for the M number of data stores. The data may be reconstructed using an L1-minimization computation as mentioned earlier in the description. Further, in an implementation, the survey conducting system 202 uses a platform, such as MATLAB, C/C++, Java, or the like, for carrying out the L1-minimization computation. The reconstructed or the estimated current survey data of the survey item for the T number of data stores may be further used or processed for a variety of purposes. The estimated current survey data is stored in the estimated data 232.

Now, subsequent to determining the target number M, if the survey is to be conducted for multiple survey items, the store identification module 226 identifies M number of data stores randomly from the T number of data stores for the data collection. After identifying the M number of data stores, the computation module 224 obtains historical survey data of the multiple survey items for the M number of data stores. The historical survey data may be pre-stored in the survey conducting system 202, or may be obtained from an external database (not shown) and stored in the historical data 236. Based on the historical survey data, the computation module 224 identifies a correlation between the historical survey data of one or more pairs of the multiple survey items. The correlation may be based on the influence of data of one product on the data of the other product in each pair.

After identifying the correlation in the historical survey data of the multiple survey items, the store identification module 226 selects M' number of data stores from the M data stores based on the correlation. In an implementation, the number M' is an integer less than the number M. For selecting the M' number of data stores, the number of data stores may be reduced by dropping one or more data stores from the M number of data stores identified for data collection. As mentioned earlier, a data store may be dropped if one or more pairs of survey items, from the multiple survey items, has a correlation.

Further, after selecting the M' number of data stores, the data fetching module 228 fetches or obtains current survey data of the multiple survey items for the M' number of data stores. The current survey data of the multiple survey items for the M' number of data stores may be fetched or obtained from the network terminals 204 and/or from the human surveyors 210 as mentioned earlier in the description.

Based on the fetched current survey data for the M' number of data stores, the computation module 224 estimates current survey data of the multiple survey items for the T data stores. Again, the computation module 224 may perform the L1-minimization computation on the current survey data of the multiple survey items for the M' number of data stores to reconstruct and estimate the current survey data of the multiple survey items for the T number of data stores.

In an implementation, the computation module 224 is configured to perform a check on whether the survey is to be conducted for a single survey item or for multiple survey items. In an implementation, the computation module 224 may receive an input from a user operating the survey conducting system 202 for making such a choice.

The survey conducting system 202 may be used to conduct a survey for data stores including, but not restricting to, retail stores, hospitals, and farming fields. In an implementation, where the data stores are retail stores, the survey items include retail products offered for sales by the retail stores. For said implementation, the historical survey data include historical retail or sales data of the retail products, and the current survey data include current retail or sales data of the retail products.

Although embodiments for the method and system for conducting a survey have been described in language specific to structural features, it is to be understood that the invention is not necessarily limited to the specific features described. Rather, the specific features are disclosed and explained in the context of a few embodiments for the method and system.

Other advantages of the method and system of the present subject matter will become better understood from the description and claims of an exemplary embodiment of the method and system. The method and system of the present subject matter are not restricted to the embodiments that are mentioned above in the description.

Although the subject matter has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the spirit or scope of the present subject matter as defined.

## Claims

1. A method for conducting a survey of at least one survey item, the method comprising:
obtaining historical survey data of the at least one survey item for T number of data stores;
determining a sparsity number K associated with the historical survey data of the at least one survey item for the T number of data stores; and
determining a target number M based on the sparsity number K, wherein the target number M is indicative of a reduced number of data stores, present amongst the T number of data stores, for collection of current survey data to estimate current survey data of the at least one survey item for the T number of data stores.

2. The method as claimed in claim 1 further comprising:
identifying M number of data stores randomly from the T number of data stores for the collection of the current survey data;
obtaining current survey data of the at least one survey item for the M number of data stores; and
estimating current survey data of the at least one survey item for the T number of data stores based on the current survey data for the M number of data stores, wherein the estimating the current survey data for the T number of data stores is based on an L1-minimization computation on the current survey data obtained.

3. The method as claimed in claim 1 further comprises:
identifying M number of data stores randomly from the T number of data stores;
obtaining historical survey data of multiple survey items for the M number of data stores;
selecting M' number of data stores from the M number of data stores based on a correlation between the historical survey data of one or more pairs of the survey items, wherein the number M' is integer less than the number M;
obtaining current survey data of the multiple survey items for the M' number of data stores; and
estimating current survey data of the multiple survey items for the T number of data stores based on the current survey data for the M' number of data stores, wherein the estimating the current survey data for the T number of data stores is based on an L1-minimization computation on the current survey data obtained.

4. The method as claimed in claim 1 further comprising:
distributing the historical survey data of each of the at least one survey item for the T number of data stores as values of elements of a matrix of an order of N1 x N2, wherein N1 and N2 are integers greater than zero such that N1 x N2 is equal to the number T, and each of the elements of the matrix has the historical survey data of one survey item for one of the T number of data stores, wherein,
the determining of the sparsity number K is based on number of elements of the matrix, amongst all the elements of the matrix, having non-zero values after performing one of Discrete Fourier Transform, Wavelet Transform, Discrete Cosine Transform (DCT), and Karhunen-Loève Transform on the matrix.

5. The method as claimed in claim 4, wherein the distributing the historical survey data of each of the at least one survey item for the T number of data stores is based on a lexicographical order of the T number of data stores with a location proximity of the T number of data stores.

6. The method as claimed in claim 1, wherein the target number M is a sum of a multiplication factor s times the sparsity number K and an oversampling factor δ, wherein the oversampling factor δ is less than the multiplication factor s times the sparsity number K, wherein the multiplication factor s is 1.5.

7. A survey conducting system (202) comprising:
a processor (212);
a computation module (224) coupled to the processor (212), the computation module (224) is configured to,
obtain historical survey data of at least one survey item for T number of data stores; and
determine a sparsity number K based on performing a predefined mathematical transformation on the historical survey data of the at least one survey item for the T number of data stores; and
determine a target number M based on the sparsity number K, wherein the target number M is indicative of a reduced number of data stores, present amongst the T number of data stores, for collection of current survey data to estimate current survey data of the at least one survey item for the T number of data stores.

8. The survey conducting system (202) as claimed in claim 7 further comprises:
a store identification module (226) coupled to the processor (212), the store identification module (226) is configured to identify M number of data stores randomly from the T number of data stores for the collection of current survey data; and
a data fetching module (228) coupled to the processor (212), the data fetching module (228) is configured to fetch current survey data of the at least one survey item for the M number of data stores, wherein the current survey data is fetched from at least one of a sensor and a human surveyor, and wherein,
the computation module (224) is configured to estimate current survey data of the at least one survey item for the T number of data stores based on the current survey data for the M number of data stores.

9. The survey conducting system (202) as claimed in claim 7 further comprising:
a store identification module (226) coupled to the processor (212), the store identification module (226) is configured to identify M number of data stores randomly from the T number of data stores for the collection of current survey data, wherein,
the computation module (224) is configured to,
obtain historical survey data of multiple survey items for the M number of data stores; and
identify a correlation between the historical survey data of one or more pairs of the multiple survey items.

10. The survey conducting system (202) as claimed in claim 9, wherein the store identification module (226) is configured to select M' number of data stores from the M number of data stores based on the correlation, wherein the number M' is integer less than the number M.

11. The survey conducting system (202) as claimed in claim 10 further comprising a data fetching module (228) coupled to the processor (212), the data fetching module(228) is configured to fetch current survey data of the multiple survey items for the M' number of data stores, wherein the current survey data is fetched from at least one of a sensor and a human surveyor, and wherein,
the computation module (224) is configured to estimate current survey data of the multiple survey items for the T number of data stores based on the current survey data for the M' number of data stores.

12. The survey conducting system (202) as claimed in claim 7, wherein the computation module (224) is configured to,
distribute the historical survey data of each of the at least one survey item for the T number of data stores as values of elements of a matrix of an order of N1xN2, wherein N1 and N2 are integers greater than zero such that N1xN2 is equal to the number T, and each of the elements of the matrix has the historical survey data of one survey item for one of the T number of data stores; and
determine, for each of the at least one survey item, the sparsity number K based on number of elements of the matrix, among all the elements of the matrix, having non-zero values after performing the predefined mathematical transformation on the matrix

13. The survey conducting system (202) as claimed in claim 7, wherein the target number M is a multiplication factor s times the sparsity number K, such that the target number M is in a range from about 0.3 times the number T to about 0.5 times the number T.

14. A method for conducting a survey of at least one retail product, the method comprising:
obtaining historical retail data of the at least one retail product for T number of retail stores;
determining a sparsity number K associated with the historical retail data of the at least one retail product for the T number of retail stores; and
determining a target number M based on the sparsity number K, wherein the target number M is indicative of a reduced number of retail stores, from the T number of retail stores, for collection of current retail data to estimate current retail data of the at least one retail product for the T number of retail stores.

15. A non-transitory computer-readable medium having computer-executable instructions that when executed perform acts comprising:
obtaining historical survey data of the at least one survey item for T number of data stores;
determining a sparsity number K associated with the historical survey data of the at least one survey item for the T number of data stores; and
determining a target number M based on the sparsity number K, wherein the target number M is indicative of a reduced number of data stores, present amongst the T number of data stores, for collection of current survey data to estimate current survey data of the at least one survey item for the T number of data stores.
